# FASCICULE DE BREVET EUROPEEN

(11) **EP 0 780 747 B1**
(45) Date de publication et mention de la délivrance du brevet: **06.06.2001**
(21) Numéro de dépôt: 96402836.9
(22) Date de dépôt: 20.12.1996
(51) Int. Cl.: G05D 1/00, G05D 1/03

(54) **Procédé d'aide au pilotage d'un mobile, en particulier d'un véhicule motorisé se déplaçant sur une piste ou une route**
Verfahren zur Steuerungshilfe eines beweglichen Objektes, insbesondere eines motorisierten Fahrzeugs, das sich auf einer Piste oder auf dem Weg bewegt
Method for aiding piloting of a mobile object, in particular of a motorised vehicle which is travelling on a track or on the road

(30) Priorité: 21.12.1995 FR 9515242
(43) Date de publication de la demande: 25.06.1997
(73) Titulaire: GIAT INDUSTRIES, 78000 Versailles (FR)
(72) Inventeur: Urvoy, Emile, Roussigny, 91470 Limours (FR)

(56) Documents cités:
- EP-A- 0 313 223
- US-A- 4 855 822
- IEEE TRANSACTIONS ON INDUSTRIAL ELECTRONICS, vol. 39, no. 3, 1 Juin 1992, pages 181-188, XP000301579 MANIGEL J ET AL: "VEHICLE CONTROL BY COMPUTER VISION"

## Description

La présente invention concerne un procédé d'aide au pilotage d'un mobile, en particulier d'un véhicule motorisé se déplaçant sur une piste ou une route.

D'une manière générale, la télécommande de véhicules motorisés se déplaçant à des vitesses relativement élevées, présente la double particularité de donner de grandes difficultés à l'opérateur ou au pilote pour apprécier tant la vitesse du véhicule que la complexité de la trajectoire à parcourir. Ces difficultés s'avèrent en outre augmentées lorsque l'opérateur ne dispose que d'une possibilité limitée de retour d'informations visuelles.

Pour améliorer la qualité du télépilotage à grande vitesse d'un véhicule non habité, une première approche consiste à reproduire au mieux les conditions de pilotage. Une telle approche fait l'objet à l'heure actuelle de différentes études qui vont être résumées ci-après.

Le brevet US-A-4 855 822 cherche par exemple à améliorer la transmission sur des canaux du type audio des informations visuelles captées par des caméras vidéo embarquées sur le véhicule, notamment lorsque ce dernier se déplace hors de vue de l'opérateur. Ces études portent entre autres sur des techniques de compression-décompression et d'extrapolation d'images vidéo.

On cherche également à améliorer l'équipement du poste de télécommande, en faisant abstraction des problèmes de transmission, pour rechercher les conditions permettant d'améliorer la téléprésence et ainsi exploiter les mécanismes connus d'apprentissage du pilotage d'un véhicule. Ces études font notamment ressortir l'intérêt de la vision panoramique à partir de plusieurs caméras vidéo donnant chacune un champ de vision de l'ordre de 60°, et cette vision est ensuite restituée à l'opérateur par trois écrans de contrôle disposés autour du poste de pilotage qui est organisé comme un poste de pilotage classique avec un volant et des pédales d'accélérateur et de frein.

On cherche par ailleurs à donner à l'opérateur des sensations accélérométriques à partir d'informations mesurées sur le véhicule. Les principes et les concepts décrit dans le brevet EP-A-0 313 223 s'apparentent alors à ceux développés dans les simulateurs de vol ou d'apprentissage du pilotage des véhicules.

On cherche enfin à combiner une vision stéréoscopique donnée par deux caméras vidéo embarquées sur le véhicule mais orientées dans la même direction, et le pilotage de l'orientation des caméras par des capteurs permettant de connaître les déplacements de la tête de l'opérateur. Dans un tel système, les images vues respectivement par chacune des deux caméras placées sur le véhicule, sont affichées sur deux petits écrans de contrôle montés dans le casque du télépilote et présentés devant chacun de ses yeux au moyen de lames semi-transparentes également solidaires du casque de l'opérateur. Un tel système de vision stéréoscopique asservi sur les mouvements de la tête du pilote, est surtout intéressant pour aider au télépilotage en terrain très accidenté, car il permet de donner la vision du relief d'une part, et de restituer des informations sur la pente du terrain par des artifices forçant l'opérateur à relever la tête en montée et la baisser en descente d'autre part. Par ailleurs, le degré de mobilité latérale des caméras permet de masquer une partie de l'inconvénient du manque de champ de vision de ces caméras. L'opérateur peut en effet, par déplacement de sa tête, ordonner aux caméras de se déplacer latéralement et ainsi s'orienter sur les parties intéressantes du paysage.

Le but de l'invention est d'aborder le problème de l'aide au pilotage d'un mobile, notamment un véhicule motorisé, selon une approche différente en renonçant à reproduire au mieux les caractéristiques réelles et en privilégiant plutôt le développement d'un concept d'interfaçage entre l'opérateur et le véhicule, concept qui est un intermédiaire entre une interface directe classique et une commande automatique.

A cet effet, l'invention propose un procédé d'aide au pilotage d'un mobile, en particulier d'un véhicule motorisé se déplaçant sur une piste ou route, qui est apte à superposer à une première image représentative de la piste vue par un opérateur, une seconde image représentative de la trajectoire de consigne que doit suivre le véhicule pour atteindre un point de passage futur de la piste choisi par l'opérateur, l'image de la trajectoire de consigne étant limitée à la distance d'arrêt minimum de sécurité du véhicule sur cette trajectoire à sa vitesse actuelle, caractérisé en ce qu'il consiste à prolonger la trajectoire de consigne, au-delà de la distance d'arrêt et pour la vitesse actuelle du véhicule, par au moins une première information visuelle représentative des possibilités maximum de virage autorisées pour un virage en cours ou à venir, de manière à permettre à l'opérateur d'apprécier visuellement la corrélation entre la courbure réelle d'un virage en cours ou à venir et les possibilités maximales autorisées pour prendre ce virage.

Selon une autre caractéristique de l'invention, le procédé consiste, pour représenter les possibilités maximum de virage autorisées pour un virage en cours ou à venir à la vitesse actuelle du véhicule, à prolonger la trajectoire de consigne, au-delà du point d'arrêt situé à l'extrémité de cette trajectoire, par une première information représentative d'une trajectoire ayant le rayon de virage minimum de sécurité à la vitesse actuelle du véhicule et, de préférence, à limiter l'image de cette trajectoire du rayon de virage minimum de sécurité à la distance d'arrêt du véhicule sur cette trajectoire à partir du point d'arrêt et calculée à la vitesse actuelle du véhicule.

Ainsi, lorsque l'image de la piste fait apparaître un virage à venir alors que le véhicule se trouve encore à une distance de ce virage qui est au moins égale à la distance d'arrêt minimum de sécurité, à permettre à l'opérateur d'anticiper la prise de ce virage par comparaison visuelle de la perception qu'il a du rayon de ce virage avec le rayon minimum de sécurité R0 à la vitesse actuelle du véhicule, de manière à freiner, si nécessaire, pour diminuer la vitesse du véhicule et la rendre compatible avec le rayon de virage minimum.

D'une manière générale, le procédé d'aide au pilotage consiste à prolonger la trajectoire de consigne, au-delà de la distance d'arrêt minimum de sécurité et pour la vitesse actuelle du véhicule, par une seconde information visuelle permettant à l'opérateur d'apprécier l'écart qui existe entre les possibilités maximum de virage autorisées et le rayon de virage qu'il doit aborder et réaliser.

Selon une première version, le procédé consiste, pour permettre à l'opérateur d'apprécier l'écart précité pour aborder ou réaliser un virage lorsque le rayon R de la trajectoire de consigne au point d'arrêt situé à l'extrémité de la trajectoire de consigne, est compris entre R0 et kR0 (k > 1), à prolonger la trajectoire de consigne par une seconde information visuelle représentative d'une trajectoire ayant un rayon de virage R1 tel que R1 = R²/R0, de sorte que si les trajectoires de rayon minimum de sécurité R0 et de rayon R1 se rapprochent l'une de l'autre, l'opérateur en déduit que le véhicule aborde ou réalise un virage avec une vitesse qui se rapproche de la vitesse critique correspondant au rayon minimum de sécurité RO.

De préférence, on limite la longueur de la trajectoire de rayon R1 à la distance d'arrêt du véhicule sur cette trajectoire à partir du point d'arrêt et calculée à la vitesse actuelle du véhicule.

Par contre, pour permettre à l'opérateur d'apprécier l'écart précité pour aborder ou réaliser un virage, lorsque le rayon R de la trajectoire de consigne T au point d'arrêt situé à l'extrémité de cette trajectoire est supérieur à kR0 (k > 1), le procédé consiste à prolonger la trajectoire de consigne au-delà du point d'arrêt par une seconde information visuelle représentative d'une trajectoire de rayon R1 symétrique de la trajectoire de rayon minimum R0 par rapport à la tangente de la trajectoire de consigne au point d'arrêt, de sorte que si les trajectoires de rayon R0 et R1 ont des courbures de signe opposé l'opérateur en déduit que le véhicule peut atteindre en toute sécurité le point de passage futur qu'il a choisi, alors que si les trajectoires de rayon R0 et R1 ont des courbures de même signe, l'opérateur en déduit que le véhicule aborde ou réalise un virage à une vitese qui se rapproche de la vitesse critique correspondant au rayon minimum de sécurité R0.

De préférence, on limite la longueur de la trajectoire de rayon R1 à la distance d'arrêt du véhicule sur cette trajectoire à partir du point d'arrêt et calculée à la vitesse actuelle du véhicule.

En variante de cette première version du procédé, pour permettre à l'opérateur d'apprécier l'écart précité pour aborder ou réaliser un virage, lorsque le rayon R de la trajectoire de consigne au point d'arrêt situé à l'extrémité de cette trajectoire est supérieur à kR0 (k > 1), le procédé consiste à prolonger la trajectoire de consigne au-delà du point d'arrêt par une seconde information visuelle représentative d'une trajectoire de rayon R1 symétrique de la trajectoire de rayon minimum de sécurité R0 par rapport à la trajectoire de consigne de rayon R, de sorte que si les trajectoires de rayon R0 et R1 ont des courbures de signe opposé l'opérateur en déduit que le véhicule peut atteindre en toute sécurité le point de passage futur qu'il a choisi, alors que si les trajectoires de rayon R0 et R1 ont des courbures de même signe l'opérateur en déduit que le véhicule aborde ou réalise un virage à une vitesse qui se rapproche de la vitesse critique correspondant au rayon minimum de sécurité R0.

De préférence, on limite l'image de la trajectoire de rayon R1 à la distance d'arrêt du véhicule sur cette trajectoire à partir du point d'arrêt et calculée à la vitesse actuelle du véhicule.

Selon une version simplifiée, pour permettre à l'opérateur d'apprécier l'écart précité pour anticiper, aborder et réaliser un virage, lorsque le rayon R de la trajectoire de consigne au point d'arrêt situé à l'extrémité de cette trajectoire est supérieur à kR0 (k > 1), le procédé consiste à prolonger la trajectoire de consigne au-delà du point d'arrêt par une seconde information visuelle représentative d'une trajectoire de rayon R1 symétrique de la trajectoire de rayon minimum R0 par rapport à la tangente de la trajectoire de consigne au point d'arrêt, de sorte que si les trajectoires de rayon R0 et R1 ont des courbures de signe opposé l'opérateur en déduit que le véhicule peut atteindre en toute sécurité le point de passage futur qu'il a choisi, alors que si les trajectoires de rayon R0 et R1 ont des courbures de même signe, l'opérateur en déduit que le véhicule aborde ou réalise un virage à une vitesse qui se rapproche de la vitesse critique correspondant au rayon minimum de sécurité R0.

Par contre, pour permettre à l'opérateur d'apprécier l'écart précité pour aborder ou réaliser un virage, lorsque le rayon R de virage en cours de la trajectoire de consigne au point d'arrêt situé à l'extrémité de la trajectoire de consigne est compris entre R0 et kR0 (k > 1), à prolonger la trajectoire de consigne par une seconde information visuelle représentative d'une trajectoire ayant un rayon de virage kR0, de sorte que la représentation des trajectoires de rayon R0 et de rayon kR0 indique à l'opérateur que le virage actuel se réalise à une vitesse qui se rapproche de la vitesse critique correspondant au rayon minimum de sécurité R0.

De préférence, on limite l'image de la trajectoire de rayon kR0 à la distance d'arrêt sur cette trajectoire à partir du point d'arrêt et calculée à la vitesse actuelle du véhicule.

D'une manière générale, le procédé consiste à calculer les trajectoires précitées en prenant en compte, en plus de la vitesse actuelle du véhicule, la forme géométrique du terrain, sa pente et son dévers, en particulier dans la zone entourant le point d'arrêt situé à l'extrémité de la trajectoire de consigne.

Le procédé consiste également à calculer le rayon minimum de sécurité R0 et la distance d'arrêt minimum de sécurité du véhicule sur les différentes trajectoires en fonction de l'adhérence du véhicule sur la piste, cette adhérence étant soit fournie par l'opérateur soit calculée.

Dans le cas où le procédé est appliqué au télépilotage d'un véhicule non habité, on superpose les images de la piste et de la trajectoire de consigne sur un écran de contrôle situé dans un poste de télépilotage où se trouve l'opérateur, l'image de la piste étant captée par une caméra embarquée sur le véhicule, par exemple.

Par contre, dans cas où l'opérateur ou pilote est situé à l'intérieur du véhicule, en particulier un véhicule blindé, le procédé consiste à superposer la trajectoire de consigne à l'image de la piste qui correspond à la vision réelle de cette piste perçue par le pilote.

Dans cette hypothèse, le procédé peut consister à faire percevoir à l'opérateur la vision réelle de la piste au travers d'un épiscope et à superposer la trajectoire de consigne au moyen d'une lame semi-transparente placée sur le chemin optique entre l'oeil de l'opérateur et l'entrée de l'épiscope, par exemple.

Selon un avantage important de l'invention, le procédé permet notamment à l'opérateur d'apprécier visuellement la corrélation entre la vitesse du véhicule et une trajectoire en cours ou future à réaliser.

Concrètement, le procédé donne la possibilité à l'opérateur, d'une part, de pouvoir visuellement corréler le potentiel de virage autorisé par la vitesse du véhicule et la forme future de la trajectoire de consigne et, d'autre part, d'apprécier précisément la vitesse de son véhicule par la matérialisation de la distance d'arrêt sur l'écran de contrôle, c'est-à-dire que l'on présente visuellement à l'opérateur la conséquence tangible de la vitesse du véhicule sur la distance d'arrêt de sécurité plutôt que la vitesse elle-même, cette vitesse n'ayant en effet d'intérêt véritable que sur sa double conséquence sur la distance d'arrêt et sur la possibilité de réaliser un virage plus ou moins serré à cette vitesse.

Selon un autre avantage de l'invention, le procédé permet d'introduire une notion d'anticipation pour permettre à l'opérateur de se rendre compte avant qu'un risque véritable n'apparaisse, que la vitesse actuelle de son véhicule n'est pas compatible avec un virage que le véhicule aura à négocier ultérieurement.

D'ailleurs, cette notion d'anticipation correspond précisément à imposer à l'opérateur de vérifier que la vitesse de son véhicule est adaptée à ce virage à venir, alors que le véhicule est distant du virage de la distance d'arrêt, cette distance d'arrêt prenant aussi bien en compte le fait que le véhicule roule en ligne droite qu'en virage.

Le procédé selon l'invention s'applique au pilotage à distance ou télépilotage d'un véhicule non habité, depuis un poste de télépilotage, ainsi qu'à l'aide au pilotage d'un véhicule blindé habité où les conditions de visibilité du pilote sont très réduites. Dans ce cas, l'image représentative de la piste n'est plus une image donnée par une caméra mais la vision réelle de la piste perçue par le pilote au travers d'un épiscope, par exemple.

La trajectoire de consigne est alors calculée comme précédemment et, avec un dispositif de vision du type « tête haute » utilisé dans l'aéronautique, on peut superposer la trajectoire de consigne du véhicule à la vision réelle de la piste perçue par le pilote.

Enfin, le procédé selon l'invention peut être également appliqué à l'apprentissage du pilotage d'un véhicule. Dans ce cas, une lame semi-transparente est placée entre les yeux du pilote et le pare-brise du véhicule, par exemple. Sur cette lame, on projette la trajectoire calculée, dont la luminosité est asservie sur la luminosité ambiante pour permettre de superposer au paysage réel la trajectoire de consigne donnée par le pilote. Cette trajectoire ainsi projetée sur le paysage réel permet d'apprendre à l'opérateur à associer à sa vitesse d'avancement et aux commandes qu'il donne au véhicule, la trajectoire réelle que va réaliser son véhicule mais surtout la distance d'arrêt et les possibilités potentielles de manoeuvre ou de virage.

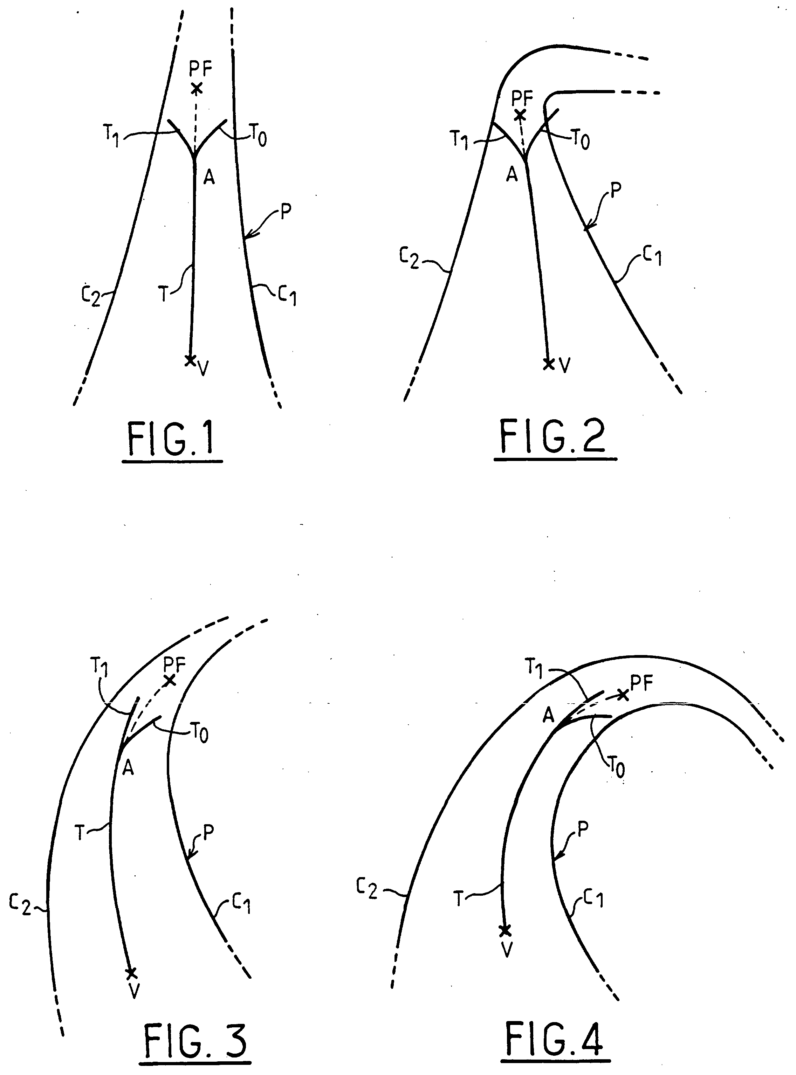

D'autres avantages, caractéristiques et détails de l'invention ressortiront du complément de description qui va suivre, fait en référence aux dessins annexés, dont les figures 1 à 4 illustrent différentes phases du procédé avec les moyens visuels qui permettent à l'opérateur de l'aider dans le pilotage du véhicule.

D'une manière générale, selon le concept d'aide au pilotage selon l'invention, un opérateur qui est chargé de piloter ou de télépiloter un véhicule motorisé va se trouver avoir pour mission implicite de servir de détecteur d'écart entre la trajectoire future à réaliser et les possibilités réelles du véhicule.

Soit un opérateur installé dans un poste de télépilotage d'un véhicule motorisé non habité se déplaçant sur une piste, une route, un chemin ou analogue. Le poste de télépilotage va notamment comprendre un dispositif récepteur équipé d'un écran vidéo de contrôle ou de surveillance sur lequel un ensemble d'informations vont être visualisées pour permettre à l'opérateur de décider s'il doit ou non agir sur les dispositifs d'orientation, de vitesse et de freinage du véhicule au moyen d'un ensemble de télécommandes usuelles, afin de faire suivre au véhicule une trajectoire déterminée avec une certaine marge de sécurité.

Cette aide au pilotage consiste tout d'abord à visualiser une image de la piste sur laquelle se déplace le véhicule. Cette image peut être définie à partir d'une image captée par des moyens vidéo embarqués sur le véhicule, une caméra par exemple, et transmise par tout support de communication approprié au poste de télépilotage.

A cette image de la piste, on superpose une seconde image qui va simuler la trajectoire de consigne que doit suivre le véhicule pour atteindre un point de passage futur de la piste. Ce point de passage est choisi par l'opérateur d'une façon naturelle comme tout conducteur qui pilote son véhicule pour lui faire suivre une trajectoire déterminée. La représentation de cette trajectoire de consigne est limitée à la distance d'arrêt minimum de sécurité du véhicule sur cette trajectoire et calculée à partir de la vitesse actuelle du véhicule. La vision de la piste s'étend bien évidemment au-delà de cette distance d'arrêt.

D'une manière générale, on prolonge la trajectoire de consigne, au-delà de la distance d'arrêt et pour la vitesse actuelle du véhicule, par au moins une première information visuelle qui simule les possibilités maximum de virage autorisées pour un virage en cours ou à venir, cette première information étant par exemple le rayon de virage minimum de sécurité à la vitesse actuelle du véhicule.

Plus précisément, dans une première version du procédé et selon une première vision présentée à l'opérateur et schématiquement illustrée sur la figure 1, on visualise sur l'écran de contrôle :
- l'image d'une piste P sensiblement en ligne droite sur laquelle roule le véhicule matérialisé par le point V, et cette image, dans la représentation qui en est donnée, est limitée aux deux côtés C1 et C2 qui bordent cette piste P,
- le point de passage futur PF du véhicule choisi sur cette piste P par l'opérateur,
- la trajectoire de consigne T calculée notamment à partir de l'orientation actuelle du véhicule et des consignes de direction données par l'opérateur pour passer par le point de passage futur PF, cette trajectoire de consigne T étant également, dans l'exemple donné, supposée en ligne droite et sa représentation limitée à la distance d'arrêt minimum de sécurité du véhicule V sur cette trajectoire T calculée à sa vitesse actuelle et à partir de la position actuelle du véhicule V,
- la trajectoire T0 correspondant au rayon de virage minimum de sécurité R0 calculé pour la vitesse actuelle du véhicule, cette trajectoire T0 correspondant à la première information visuelle qui simule les possibilités maximum de virage autorisées, la représentation de cette trajectoire T0 étant également limitée à la distance d'arrêt minimum de sécurité du véhicule calculée sur cette trajectoire T0 à sa vitesse actuelle et à partir du point d'arrêt A, et
- la trajectoire T1 symétrique de la trajectoire T0 par rapport à la tangente de la trajectoire de consigne T au point d'arrêt A, la représentation de cette trajectoire T1 étant également limitée à la distance d'arrêt minimum de sécurité du véhicule V sur cette trajectoire T1 calculée à sa vitesse actuelle et à partir du point d'arrêt A.

Dans l'exemple illustré sur la figure 1 et avec une trajectoire de consigne T sensiblement en ligne droite, la trajectoire T0 de rayon minimum de sécurité R0 donne les possibilités maximum de virage autorisées pour un virage à venir tournant vers la droite, et la trajectoire T1 donne les possibilités maximum de virage autorisées pour un virage à venir tournant vers la gauche, ce virage n'étant pas encore visualisé sur l'écran de contrôle.

Dans ces conditions, l'opérateur peut éventuellement accélérer progressivement son véhicule en actionnant la télécommande qui agit sur le dispositif de commande de vitesse du véhicule. Cette accélération augmente la vitesse du véhicule, et il en résulte que la trajectoire de consigne T présentée à l'opérateur sur l'écran de contrôle s'allonge puisque la distance d'arrêt du véhicule augmente avec sa vitesse. Parallèlement, les rayons de virage T0 et T1 augmentent, ainsi que les distances d'arrêt sur ces rayons de virage.

Ainsi, l'opérateur peut apprécier visuellement la corrélation entre la distance de visibilité de la route qu'il perçoit sur l'écran de contrôle et la distance d'arrêt de sécurité du véhicule à sa vitesse actuelle, alors que la visualisation des trajectoires T0 et T1 permettra à l'opérateur d'anticiper la prise d'un virage à venir vers la droite ou vers la gauche, lorsque ce virage à venir apparaîtra sur l'image de la piste visualisée sur l'écran de contrôle.

Ensuite, comme cela est schématiquement illustré sur la figure 2, on suppose qu'un virage à venir à négocier vers la droite apparaît sur l'écran de contrôle. En examinant l'écart entre la trajectoire T0 qui prolonge la trajectoire de consigne T à partir du point d'arrêt A, et la perception qu'il a du virage à venir qu'il aura à négocier, l'opérateur peut immédiatement déterminer si la vitesse actuelle de son véhicule est compatible avec la prise de ce virage à venir dans des conditions minimum de sécurité.

Autrement dit, l'opérateur peut ainsi anticiper la prise d'un virage à venir et freiner, si nécessaire, pour diminuer la vitesse du véhicule et la rendre compatible avec le rayon de virage à venir. Cet effet d'anticipation est donné par le fait que les moyens mis à la disposition de l'opérateur lui permettent d'adapter la vitesse du véhicule alors que celui-ci se trouve encore à une distance du virage à réaliser qui est au moins égale à la distance d'arrêt minimum de sécurité.

Pour aborder et réaliser ce virage, on présente une seconde vision à l'opérateur qui est schématiquement illustrée sur la figure 3. L'opérateur a choisi un point de passage futur PF dans le virage, et la trajectoire de consigne T s'est incurvée pour simuler la trajectoire que doit suivre le véhicule pour atteindre ce point de passage PF. Concrètement, si le rayon R de la trajectoire de consigne T au point d'arrêt A est compris entre le rayon minimum de sécurité R0 et kR0 (k > 1), on présente à l'opérateur sur l'écran de contrôle la trajectoire T0 de rayon minimum de sécurité R0 et une trajectoire T1 de rayon R1 égal à R²/R0. Ainsi, l'opérateur peut apprécier visuellement la marge entre le rayon de virage R en cours et le maximum réalisable avec une marge de sécurité donnée, en surveillant le rapprochement entre les deux trajectoires T0 et T1. En effet, si ces deux trajectoires T0 et T1 se rapprochent l'une de l'autre, l'opérateur juge instantanément qu'il se rapproche du rayon minimum de sécurité. Il peut alors décider de ralentir la vitesse du véhicule pour conserver une marge de sécurité suffisante, les informations visualisées sur l'écran de contrôle prenant immédiatement en compte les nouveaux paramètres donnés par l'opérateur.

Par contre, pour aborder et réaliser ce virage, si le rayon de virage R de la trajectoire de consigne T est supérieur à kR0 (k > 1), la trajectoire Tl qui est visualisée au-delà du point d'arrêt A, est le symétrique de la trajectoire T0 de rayon minimum R0 par rapport à la tangente de la trajectoire T au point d'arrêt A. Dans ces conditions, si les trajectoires T0 et T1 ont des courbures de signe opposé, l'opérateur en déduit que le véhicule peut atteindre en toute sécurité le point de passage futur PF qu'il a choisi. Au contraire, si les trajectoires T0 et T1 ont des courbures de même signe, l'opérateur en déduit que le rayon de virage R en cours se réalise à une vitesse qui s'approche de la vitesse critique correspondant au rayon de virage minimum de sécurité.

En variante des première et seconde visions précitées données à l'opérateur sur l'écran de contrôle pour anticiper, aborder et réaliser un virage, on présente à l'opérateur une seule vision dès l'instant où le virage R de la trajectoire de consigne T au point d'arrêt A est supérieur à kR0. Dans ce cas, on prolonge sur l'écran de contrôle la trajectoire de consigne T au-delà du point d'arrêt A par une trajectoire T1 qui est la symétrique de la trajectoire T0 de rayon minimum de sécurité R0 par rapport à la trajectoire de consigne T de rayon de virage R. Dans ces conditions, si les trajectoires T0 et T1 présentées à l'opérateur lorsqu'il aborde ou réalise un virage ont des courbures de signe opposé, l'opérateur en déduit que le véhicule peut atteindre en toute sécurité le point de passage futur PF qu'il a choisi. Au contraire, si les trajectoires T0 et T1 ont des courbures de même signe,l'opérateur en déduit que le véhicule aborde ou réalise un virage à une vitesse qui s'approche de la vitesse critique correspondant au rayon du virage minimum de sécurité R0.

Enfin, comme cela est schématiquement illustré sur la figure 4, le véhicule réalise un virage, et la vision que l'opérateur perçoit de la piste P sur l'écran de contrôle fait apparaître un virage à venir à la suite de ce virage en cours. Dans cette hypothèse, l'opérateur va pouvoir également anticiper la prise de ce virage à venir en examinant l'écart entre la trajectoire T0 qui prolonge la trajectoire de consigne T à partir du point d'arrêt A, et la perception qu'il a du virage à venir qu'il aura à négocier.

Selon une seconde version du procédé ou version simplifiée, lorsque le rayon de virage R en cours ou à venir est supérieur à kR0, on présente à l'opérateur à partir du point d'arrêt A une première vision qui est la représentation de la trajectoie T0 de rayon R0 et de la trajectoire T1 symétrique de la trajectoire T0 par rapport à la tangente au point d'arrêt A de la trajectoire de consigne T. Cette représentation indique à l'opérateur soit que le virage en cours ou à venir peut être réalisé ou négocié dans des conditions minimum de sécurité si les extrémités des deux trajectoires T0 et T1 ont des courbures de signe opposé, sinon le virage en cours ne peut être abordé ou réalisé dans des conditions minimum de sécurité.

Par contre, lorsque le rayon de virage R en cours ou à venir est compris entre R0 et kR0 (R0 rayon minimum de sécurité), on présente à l'opérateur à l'extrémité de la trajectoire de consigne T une seconde vision qui est la représentation des trajectoires T0 et T1 ayant respectivement les rayons R0 et kRO. Cette représentation indique à l'opérateur que le virage en cours approche de la zone critique et ce, dans le but de l'inciter à réduire la vitesse du véhicule pour sortir de cette zone critique.

L'intérêt de cette seconde vision est d'être plus simple que les précédentes à interpréter par l'opérateur et de nécessiter de sa part une attention moins soutenue.

Ainsi, l'ensemble des informations présentées à l'opérateur sur l'écran de contrôle, lui permettent de donner au véhicule la commande de rayon de virage qui lui permettra de passer à l'endroit désiré, et d'apprécier la cohérence entre la vitesse actuelle du véhicule pour anticiper l'arrivée d'un virage et de négocier ce virage dans des conditions minimum de sécurité.

D'une manière générale, des moyens sont utilisés pour identifier la forme approximative de la géométrie de la piste et de la position approximative de cette géométrie relativement au champ instantané de la caméra embarquée sur le véhicule, pour donner la sensation ergonomique que la trajectoire de consigne présentée est bien fixe relativement au sol, malgré les mouvements de tangage et de roulis du véhicule. La longueur de la trajectoire de consigne est bien évidemment calculée à partir de la vitesse actuelle du véhicule, mais elle est également fonction de la pente estimée moyenne de la piste, du rayon de la trajectoire donné par l'opérateur pour passer par le point de passage futur qu'il a choisi, et de l'adhérence du véhicule sur la piste. Cette adhérence peut être prédéterminée par l'opérateur ou calculée. Plus précisément, l'opérateur peut éventuellement choisir à partir d'un sélecteur mis à sa disposition trois positions correspondant à des adhérences prédéfinies : très bonnes, moyennes et faibles. Ce choix est effectué en fonction notamment des caractéristiques du véhicule, de la dextérité et de l'expérience de l'opérateur, et de la mission à accomplir.

En outre, sachant que le véhicule peut être amené à se déplacer sur un terrain non structuré, on doit admettre que la forme géométrique du terrain ne soit pas toujours assimilable à un plan situé dans le prolongement du plan tangent instantané matérialisé par les pieds de suspension du véhicule, par exemple. Pour tenir compte de ce facteur et mieux simuler la forme géométrique du terrain, on peut mettre en place sur le véhicule un capteur de distance pour délivrer une information qui permet de connaître la distance d'un point futur de la trajectoire de consigne, fixe ou variable par pilotage de l'orientation du capteur relativement au véhicule. Ainsi, le terrain instantané peut être calculé par interpolation entre le plan tangent matérialisé par les pieds de suspension et le point de passage futur, une telle réalisation présentant l'avantage de ne pas nécessiter des capteurs inertiels.

Selon une autre forme de réalisation, on peut utiliser un capteur qui, au lieu d'être ponctuel, délivre une information qui permet de connaître approximativement le plan tangent au terrain en un point le long de la trajectoire de consigne. Cette information plus riche que la précédente, permet de calculer un terrain instantané présentant un point d'inflexion. Une telle réalisation ne nécessite pas non plus de capteurs intertiels, mais ces derniers pourraient être avantageusement utilisés pour filtrer les informations délivrés par le capteur.

En variante, la connaissance de la forme géométrique du terrain peut être obtenue à partir d'un capteur vidéo associé à une nappe laser continue qui éclaire le terrain et permet à partir d'un point d'observation extérieur au plan laser, de déterminer une ligne de profil approximative le long de la trajectoire future. Des moyens de traitement spécifiques à ce type de capteur permettent alors d'obtenir directement la forme de cette ligne de profil dans le repère du véhicule. Avantageusement, deux capteurs vidéo sont placés de façon symétrique de part et d'autre à l'avant du véhicule.

Enfin, la connaissance de la forme géométrique du terrain pourrait être obtenue à partir d'un capteur simple de distance, du type acoustique, optique ou électromagnétique, ces capteurs étant orientables par rapport au véhicule, ou du type laser 3D donnant directement la forme géométrique globale du terrain dans le repère véhicule et dans un champ de l'ordre de grandeur de celui de la caméra vidéo.

D'une manière générale, le procédé s'applique pour une vitesse du véhicule qui est globalement supérieure à 20 km/h, c'est-à-dire que l'on suppose que le véhicule ne peut pas s'arrêter sur une distance très courte.

Le procédé d'aide au pilotage tel que décrit précédemment a été appliqué au cas d'un véhicule non habité et télépiloté par un opérateur situé dans un poste de télépilotage. Ce procédé s'applique également au cas d'un véhicule habité, en particulier un véhicule blindé où les conditions de visibilité du pilote sont le plus souvent très réduites. Dans ce cas, l'image représentative de la piste n'est plus une image donnée par la caméra mais correspond à la vision réelle de la piste perçue par le pilote au travers d'un épiscope par exemple. La trajectoire de consigne T et les trajectoires T0 et T1 précitées sont alors superposées à la vision réelle de la piste perçue par le pilote. Pour cela, on peut mettre en place une lame semi-transparente sur le chemin optique entre l'oeil du pilote et l'entrée de l'épiscope, par exemple.

Bien évidemment, l'invention s'applique aussi bien à des véhicules à roues directrices qu'à des véhicules chenillés.

## Revendications

1. Procédé d'aide au pilotage d'un mobile, en particulier d'un véhicule (V) motorisé se déplaçant sur une piste (P) ou route, apte à superposer à une première image représentative de la piste (P) vue par un opérateur, une seconde image représentative de la trajectoire de consigne (T) que doit suivre le véhicule (V) pour atteindre un point de passage futur (PF) de la piste (P) choisi par l'opérateur, l'image de la trajectoire de consigne (T) étant limitée à la distance d'arrêt minimum de sécurité du véhicule (V) sur cette trajectoire à sa vitesse actuelle, caractérisé en ce qu'il consiste à prolonger ladite trajectoire de consigne (T), au-delà de ladite distance d'arrêt et pour la vitesse actuelle du véhicule (V), par au moins une première information visuelle représentative des possibilités maximum de virage autorisées pour un virage en cours ou à venir de manière à permettre à l'opérateur d'apprécier visuellement la corrélation entre la courbure réelle d'un virage en cours ou à venir et les possibilités maximales autorisées pour prendre ce virage.

2. Procédé d'aide au pilotage selon la revendication 1, caractérisé en ce qu'il consiste, pour représenter les possibilités maximum de virage autorisées pour un virage en cours ou à venir à la vitesse actuelle du véhicule (V), à prolonger la trajectoire de consigne (T), au-delà du point d'arrêt (A) situé à l'extrémité de cette trajectoire (T) par
une première information représentative d'une trajectoire (T0) ayant le rayon de virage minimum de sécurité (R0) à la vitesse actuelle (T0) du véhicule (V).

3. Procédé d'aide au pilotage selon la revendication 2, caractérisé en ce qu'il consiste à limiter l'image de la trajectoire (T0) du rayon de virage minimum de sécurité (R0) à la distance d'arrêt du véhicule (V) sur cette trajectoire (T0) à partir du point d'arrêt (A) et calculée à la vitesse actuelle du véhicule (V).

4. Procédé d'aide au pilotage selon la revendication 2 ou 3, caractérisé en ce qu'il consiste, lorsque l'image de la piste (P) fait apparaître un virage à venir alors que le véhicule (V) se trouve encore à une distance de ce virage qui est au moins égale à la distance d'arrêt minimum de sécurité, à permettre à l'opérateur d'anticiper la prise de ce virage par comparaison visuelle de la perception qu'il a du rayon de ce virage avec le rayon minimum de sécurité (R0) de la trajectoire (T0) à la vitesse actuelle du véhicule (V), de manière à freiner, si nécessaire, pour diminuer la vitesse du véhicule (V) et la rendre compatible avec le rayon de virage minimum (R0).

5. Procédé d'aide au pilotage selon l'une quelconque des revendications 1 à 4, caractérisé en ce qu'il consiste à prolonger la trajectoire de consigne (T), au-delà de la distance d'arrêt minimum de sécurité et pour la vitesse actuelle du véhicule (V), par une seconde information visuelle permettant à l'opérateur d'apprécier l'écart qui existe entre les possibilités maximum de virage autorisées et le rayon de virage qu'il doit aborder et réaliser.

6. Procédé d'aide au pilotage selon la revendication 5, caractérisé en ce qu'il consiste, pour permettre à l'opérateur d'apprécier l'écart précité pour aborder et réaliser un virage, lorsque le rayon (R) de la trajectoire de consigne (T) au point d'arrêt (A) situé à l'extrémité de la trajectoire de consigne (T), est compris entre R0 et kR0 (k > 1), à prolonger la trajectoire de consigne (T) par une seconde information visuelle représentative d'une trajectoire (T1) ayant un rayon de virage (R1) tel que R1 = R²/R0, de sorte que si les trajectoires (T0) de rayon minimum de sécurité (R0) et (T1) de rayon (R1) se rapprochent l'une de l'autre, l'opérateur en déduit que le véhicule aborde ou réalise un virage avec une vitesse qui se rapproche de la vitesse critique correspondant au rayon minimum de sécurité (R0).

7. Procédé d'aide au pilotage selon la revendication 6, caractérisé en ce qu'il consiste à limiter l'image de la trajectoire (T1) de rayon (R1) à la distance d'arrêt du véhicule (V) sur cette trajectoire (T1) à partir du point d'arrêt (A) et calculée à la vitesse actuelle du véhicule (V).

8. Procédé d'aide au pilotage selon la revendication 5, caractérisé en ce qu'il consiste, pour permettre à l'opérateur d'apprécier l'écart précité pour aborder et réaliser un virage, lorsque le rayon (R) de la trajectoire de consigne (T) au point d'arrêt (A) situé à l'extrémité de cette trajectoire (T) est supérieur à kR0 (k > 1), à prolonger la trajectoire de consigne (T) au-delà du point d'arrêt (A) par une seconde information visuelle représentative d'une trajectoire (T1) symétrique de la trajectoire (T0) de rayon minimum (R0) par rapport à la tangente de la trajectoire de consigne (T) au point d'arrêt (A), de sorte que si les trajectoires (T0, T1) ont des courbures de signe opposé l'opérateur en déduit que le véhicule (V) peut atteindre en toute sécurité le point de passage futur (PF) qu'il a choisi, alors que si les trajectoires (T0 et T1) ont des courbures de même signe, l'opérateur en déduit que le véhicule aborde ou réalise un virage à une vitese qui se rapproche de la vitesse critique correspondant au rayon minimum de sécurité (R0).

9. Procédé d'aide au pilotage selon la revendication 8, caractérisé en ce qu'il consiste à limiter l'image de la trajectoire (T1) à la distance d'arrêt du véhicule (V) sur cette trajectoire (T1) à partir du point d'arrêt (A) et calculée à la vitesse actuelle du véhicule (V).

10. Procédé d'aide au pilotage selon la revendication 5, caractérisé en ce qu'il consiste, pour permettre à l'opérateur d'apprécier l'écart précité pour aborder et réaliser un virage, dès l'instant où le rayon (R) de la trajectoire de consigne (T) au point d'arrêt (A) situé à l'extrémité de cette trajectoire (T) est supérieur à kR0 (k > 1), à prolonger la trajectoire de consigne (T) au-delà du point d'arrêt (A) par une seconde information visuelle représentative d'une trajectoire (T1) symétrique de la trajectoire (T0) de rayon minimum de sécurité (R0) par rapport à la trajectoire de consigne (T) de rayon (R), de sorte que si les trajectoires (T0, T1) ont des courbures de signe opposé l'opérateur en déduit que le véhicule (V) peut atteindre en toute sécurité le point de passage futur (PF) qu'il a choisi, alors que si les trajectoires (T0, T1) ont des courbures de même signe l'opérateur en déduit que le véhicule aborde ou réalise un virage à une vitesse qui se rapproche de la vitesse critique correspondant au rayon minimum de sécurité (R0).

11. Procédé d'aide au pilotage selon la revendication 10, caractérisé en ce qu'il consiste à limiter l'image de la trajectoire (T1) de rayon (R1) à la distance d'arrêt du véhicule (V) sur cette trajectoire (T1) à partir du point d'arrêt (A) et calculée à la vitesse actuelle du véhicule (V).

12. Procédé d'aide au pilotage selon la revendication 5, caractérisé en ce qu'il consiste, pour permettre à l'opérateur d'apprécier l'écart précité pour anticiper, aborder et réaliser un virage, lorsque le rayon (R) de la trajectoire de consigne (T) au point d'arrêt (A) situé à l'extrémité de cette trajectoire (T) est supérieur à kR0 (k > 1), à prolonger la trajectoire de consigne (T) au-delà du point d'arrêt (A) par une seconde information visuelle représentative d'une trajectoire (T1) symétrique de la trajectoire (T0) de rayon minimum (R0) par rapport à la tangente de la trajectoire de consigne (T) au point d'arrêt (A), de sorte que si les trajectoires (T0, T1) ont des courbures de signe opposé, l'opérateur en déduit que le véhicule (V) peut atteindre en toute sécurité le point de passage futur (PF) qu'il a choisi, alors que si les trajectoires (T0, T1) ont des courbures de même signe, l'opérateur en déduit que le véhicule aborde ou réalise un virage à une vitesse qui se rapproche de la vitesse critique correspondant au rayon minimum de sécurité (R0).

13. Procédé d'aide au pilotage selon la revendication 12, caractérisé en ce qu'il consiste, pour permettre à l'opérateur d'apprécier l'écart précité pour aborder et réaliser un virage, lorsque le rayon (R) de virage en cours de la trajectoire de consigne (T) au point d'arrêt (A) situé à l'extrémité de la trajectoire de consigne (T) est compris entre R0 et kR0 (k > 1), à prolonger la trajectoire de consigne (T) par une seconde information visuelle représentative d'une trajectoire (T1) ayant un rayon de virage kR0, de sorte que la représentation des trajectoires (T0) de rayon (R0) et (T1) de rayon kR0 indique à l'opérateur que le véhicule aborde ou réalise un virage à une vitesse qui se rapproche de la vitesse critique correspondant au rayon minimum de sécurité (R0).

14. Procédé d'aide au pilotage selon la revendication 12, caractérisé en ce qu'il consiste à limiter l'image de la trajectoire (T1) de rayon (kR0) à la distance d'arrêt sur cette trajectoire (T) à partir du point d'arrêt (A) et calculée à la vitesse actuelle du véhicule (V).

15. Procédé d'aide au pilotage selon l'une quelconque des revendications précédentes, caractérisé en ce qu'il consiste à calculer les trajectoires précitées (T, T0 et T1) en prenant en compte, en plus de la vitesse actuelle du véhicule (V), la forme géométrique du terrain, en particulier dans la zone entourant le point d'arrêt (A) situé à l'extrémité de la trajectoire de consigne (T).

16. Procédé d'aide au pilotage selon l'une quelconque des revendications précédentes, caractérisé en ce qu'il consiste à calculer le rayon minimum de sécurité (R0) et la distance d'arrêt minimum de sécurité du véhicule (V) sur la trajectoire de consigne (T) et les trajectoires (T0, T1) en fonction de l'adhérence du véhicule (V) sur la piste (P), cette adhérence étant soit fournie par l'opérateur soit calculée.

17. Procédé d'aide au pilotage selon la revendication 15, caractérisé en ce qu'il consiste à calculer la distance d'arrêt minimum de sécurité du véhicule (V) sur la trajectoire de consigne (T) et les trajectoires (T0, T1) en fonction également de la pente et du dévers de la piste (P).

18. Procédé d'aide au pilotage selon l'une quelconque des revendications précédentes, caractérisé en ce qu'il consiste à superposer les images de la piste (P) et de la trajectoire de consigne (T) sur un écran de contrôle situé dans un poste de télépilotage où se trouve l'opérateur, l'image de la piste (P) étant captée par une caméra embarquée sur le véhicule (V), par exemple.

19. Procédé d'aide au pilotage selon l'une quelconque des revendications 1 à 16, caractérisée en ce qu'il consiste, dans le cas où l'opérateur ou pilote est situé à l'intérieur du véhicule (V), à superposer la trajectoire de consigne (T) à l'image de la piste (P) qui correspond à la vision réelle de cette piste (P) perçue par le pilote.

20. Procédé d'aide au pilotage selon la revendication 18, caractérisé en ce qu'il consiste à faire percevoir à l'opérateur la vision réelle de la piste (P) au travers d'un épiscope et à superposer la trajectoire de consigne (T) au moyen d'une lame semi-transparente placée sur le chemin optique entre l'oeil de l'opérateur et l'entrée de l'épiscope, par exemple.

## Patentansprüche

1. Steuerungshilfsverfahren für einen beweglichen Körper vor, insbesondere für ein motorisiertes Fahrzeug (V), das sich auf einer Bahn (P) oder Straße fortbewegt, das über ein erstes repräsentatives Bild der vom Bediener gesehenen Bahn (P) ein zweites repräsentatives Bild des Anweisungswegs (T) legen kann, den das Fahrzeug (V) nehmen muss, um einen vom Bediener gewählten zukünftigen Passierpunkt (PF) auf der Bahn (P) zu erreichen, das Bild des Anweisungswegs (T) auf dem Mindestsicherheitsbremsweg des Fahrzeugs (V) auf diesem Weg bei seiner aktuellen Geschwindigkeit begrenzt geworden ist, dadurch charakterisiert, dass es den vorgenannten Anweisungsweg (T) oberhalb des vorgenannten Bremswegs für die aktuelle Geschwindigkeit des Fahrzeugs (V) durch mindestens eine erste repräsentative visuelle Information der erlaubten Höchstkurvenmöglichkeiten für eine vorhandene oder zukünftige Kurve verlängert, so dass der Bediener visuell die Korrelation zwischen dem reellen Radius der vorhandenen oder zukünftigen Kurve und den Höchstmöglichkeiten, diese Kurve zu nehmen, abschätzen kann.

2. Steuerungshilfsverfahren nach Anspruch 1, dadurch gekennzeichnet, dass es darin besteht, um die erlaubten Höchstkurvenmöglichkeiten für eine vorhandene oder zukünftige Kurve bei der aktuellen Geschwindigkeit des Fahrzeugs (V) darzustellen, den Anweisungsweg (T) oberhalb des Haltepunkts (A), der sich am Ende dieses Wegs (T) befindet, durch eine erste repräsentative Information eines Wegs (T0) mit dem Mindestsicherheitskurvenradius (R0) bei der aktuellen Geschwindigkeit (T0) des Fahrzeugs (V) zu verlängern.

3. Steuerungshilfsverfahren nach Anspruch 2, dadurch gekennzeichnet, dass es darin besteht, das Bild des Wegs (T0) des Mindestsicherheitskurvenradius (R0) beim Bremsweg des Fahrzeugs (V) auf diesem vom Haltepunkt (A) ausgehenden Weg (T0) und bei aktueller Geschwindigkeit des Fahrzeugs (V) berechnet zu begrenzen.

4. Steuerungshilfsverfahren nach Anspruch 2 oder 3, dadurch gekennzeichnet, dass es darin besteht, wenn auf dem Bild der Bahn (P) eine künftige Kurve erscheint, während das Fahrzeug (V) sich noch in einiger Entfernung zu dieser Kurve befindet, die mindestens dem Mindestsicherheitsbremsweg entspricht, so dem Bediener zu erlauben, diese Kurve durch visuellen Vergleich der Wahrnehmung zu nehmen, die er vom Radius dieser Kurve hat, mit dem Mindestsicherheitsradius (R0) des Wegs (T0) bei aktueller Geschwindigkeit des Fahrzeugs (V), so dass er, falls nötig, bremsen kann, um die Geschwindigkeit des Fahrzeugs (V) zu reduzieren und sie dem Mindestkurvenradius (R0) anzupassen.

5. Steuerungshilfsverfahren nach irgendeinem der Ansprüche 1 bis 4, dadurch gekennzeichnet, dass es darin besteht, den Anweisungsweg (T) oberhalb des Mindestsicherheitsbremswegs zu verlängern und bei der aktuellen Geschwindigkeit des Fahrzeugs (V) durch eine zweite visuelle Information, durch die der Bediener den Unterschied, der zwischen den erlaubten Höchstkurvenmöglichkeiten und dem Kurvenradius, den er realisieren muss, besteht, abschätzen kann.

6. Steuerungshilfsverfahren nach Anspruch 5, dadurch gekennzeichnet, dass es darin besteht, damit der Bediener den vorgenannten Unterschied abschätzen kann, um eine Kurve zu realisieren, wenn der Radius (R) des Anweisungswegs (T) beim am Ende dieses Anweisungswegs (T) befindlichen Haltepunkt (A) zwischen R0 und kR0 enthalten ist (k > 1), den Anweisungsweg (T) durch eine zweite repräsentative visuelle Information eines Wegs (Tl) mit einem Kurvenradius (R1) wie R1=R²/R0 zu verlängern, so dass, wenn die Wege (T0) des Mindestsicherheitsradius (R0) und (Tl) des Radius (R1) sich einander annähern, der Bediener daraus ableitet, dass das Fahrzeug eine Kurve mit einer Geschwindigkeit realisiert, die sich der kritischen Geschwindigkeit nähert, die dem Mindestsicherheitsradius (R0) entspricht.

7. Steuerungshilfsverfahren nach Anspruch 6, dadurch gekennzeichnet, dass es darin besteht, das Bild des Wegs (Tl) des Radius (R1) beim Bremsweg des Fahrzeugs (V) auf diesem Weg (T1) vom Haltepunkt (A) ausgehend und berechnet bei aktueller Geschwindigkeit des Fahrzeugs (V) zu begrenzen.

8. Steuerungshilfsverfahren nach Anspruch 5, dadurch gekennzeichnet, dass es darin besteht, damit der Bediener den vorgenannten Unterschied abschätzen kann, um eine Kurve zu realisieren, wenn der Radius (R) des Anweisungswegs (T) beim am Ende dieses Wegs (T) befindlichen Haltepunkt (A) höher als kR0 (k > 1) ist, den Anweisungsweg (T) oberhalb des Haltepunkts (A) durch eine zweite repräsentative visuelle Information eines Wegs (T1) zu verlängern, der symmetrisch mit dem Weg (T0) des Mindestradius (R0) im Verhältnis zur Tangente des Anweisungswegs (T) am Haltepunkt (A) ist, so dass, wenn die Wege (T0, T1) einander entgegengesetzte Krümmungen haben, der Bediener daraus ableitet, dass das Fahrzeug (V) einen vom ihm gewählten zukünftigen Passierpunkt (PF) in aller Ruhe erreichen kann, aber wenn die Wege (T0, Tl) gleicher Krümmungen haben, der Bediener daraus ableitet, dass das Fahrzeug eine Kurve mit einer Geschwindigkeit realisiert, die sich der kritischen Geschwindigkeit annähert, die dem Mindestsicherheitsradius (R0) entspricht.

9. Steuerungshilfsverfahren nach Anspruch 8, dadurch gekennzeichnet, dass es darin besteht, das Bild des Wegs (T1) beim Bremsweg des Fahrzeugs (V) auf diesem Weg (T1) vom Haltepunkt (A) ausgehend und berechnet bei aktueller Geschwindigkeit des Fahrzeugs (V) zu begrenzen.

10. Steuerungshilfsverfahren nach Anspruch 5, dadurch gekennzeichnet, dass es darin besteht, damit der Bediener den vorgenannten Unterschied abschätzen kann, um eine Kurve zu realisieren, wenn der Radius (R) des Anweisungswegs (T) beim am Ende dieses Wegs (T) befindlichen Haltepunkt (A) höher als kR0 (k > 1) ist, den Anweisungsweg (T) oberhalb des Haltepunkts (A) durch eine zweite repräsentative visuelle Information eines Wegs (T1) zu verlängern, der symmetrisch mit dem Weg (T0) des Mindestsicherheitsradius (R0) im Verhältnis zum Anweisungsweg (T) des Radius (R) ist, so dass, wenn die Wege (T0, T1) einander entgegengesetzte Krümmungen haben, der Bediener daraus ableitet, dass das Fahrzeug (V) einen vom ihm gewählten zukünftigen Passierpunkt (PF) in aller Ruhe erreichen kann, aber wenn die Wege (T0, T1) gleicher Krümmungen haben, der Bediener daraus ableitet, dass das Fahrzeug eine Kurve mit einer Geschwindigkeit realisiert, die sich der kritischen Geschwindigkeit annähert, die dem Mindestsicherheitsradius (R0) entspricht.

11. Steuerungshilfsverfahren nach Anspruch 10, dadurch gekennzeichnet, dass es darin besteht, das Bild des Wegs (T1) des Radius (R1) beim Bremsweg des Fahrzeugs (V) auf diesem vom Haltepunkt (A) ausgehenden Weg (T1) und bei aktueller Geschwindigkeit des Fahrzeugs (V) berechnet zu begrenzen.

12. Steuerungshilfsverfahren nach Anspruch 5, dadurch gekennzeichnet, dass es darin besteht, damit der Bediener den vorgenannten Unterschied abschätzen kann, um eine Kurve zu realisieren, wenn der Radius (R) des Anweisungswegs (T) beim am Ende dieses Wegs (T) befindlichen Haltepunkt (A) höher als kR0 (k > 1) ist, den Anweisungsweg (T) oberhalb des Haltepunkts (A) durch eine zweite repräsentative visuelle Information eines Wegs (T1) zu verlängern, der symmetrisch mit dem Weg (T0) des Mindestradius (R0) im Verhältnis zur Tangente des Anweisungswegs (T) am Haltepunkt (A) ist, so dass, wenn die Wege (T0, T1) einander entgegengesetzte Krümmungen haben, der Bediener daraus ableitet, dass das Fahrzeug (V) einen vom ihm gewählten zukünftigen Passierpunkt (PF) in aller Ruhe erreichen kann, aber wenn die Wege (T0, T1) gleicher Krümmungen haben, der Bediener daraus ableitet, dass das Fahrzeug eine Kurve mit einer Geschwindigkeit realisiert, die sich der kritischen Geschwindigkeit annähert, die dem Mindestsicherheitsradius (R0) entspricht.

13. Steuerungshilfsverfahren nach Anspruch 12, dadurch gekennzeichnet, dass es darin besteht, damit der Bediener den vorgenannten Unterschied abschätzen kann, um eine Kurve zu realisieren, wenn der Radius (R) der auf dem Anweisungsweg (T) liegenden Kurve beim am Ende des Anweisungswegs (T) befindlichen Haltepunkt (A) zwischen R0 und kR0 enthalten ist (k > 1), den Anweisungsweg (T) durch eine zweite repräsentative visuelle Information eines Wegs (T1) mit einem Kurvenradius kR0 zu verlängern, so dass die Darstellung der Wege (T0) des Radius (R0) und (T1) des Radius (kR0) dem Bediener zeigt, dass die aktuelle Kurve mit einer Geschwindigkeit realisiert wird, die sich der kritischen Geschwindigkeit annähert, die dem Mindestsicherheitsradius (R0) entspricht.

14. Steuerungshilfsverfahren nach Anspruch 12, dadurch gekennzeichnet, dass es darin besteht, das Bild des Wegs (T1) des Radius (kr0) beim Bremsweg des Fahrzeugs auf diesem vom Haltepunkt (A) ausgehenden Weg (T) und bei aktueller Geschwindigkeit des Fahrzeugs (V) berechnet zu begrenzen.

15. Steuerungshilfsverfahren nach irgendeinem der vorgenannten Ansprüche, dadurch gekennzeichnet, dass es darin besteht, die vorgenannten Wege (T, T0 und T1) zu berechnen, indem zusätzlich zur aktuellen Geschwindigkeit des Fahrzeugs (V) die geometrische Form des Geländes einbezogen wird, insbesondere in der Zone, die den am Ende des Anweisungswegs (T) befindlichen Haltepunkt (A) enthält.

16. Steuerungshilfsverfahren nach irgendeinem der vorgenannten Ansprüche, dadurch gekennzeichnet, dass es darin besteht, den Mindestsicherheitsradius (R0) und den Mindestsicherheitsbremsweg des Fahrzeugs (V) auf dem Anweisungsweg (T) und den Wegen (T0, T1) abhängig von der Haftung des Fahrzeugs (V) auf der Bahn (P) zu berechnen, diese Haftung wird entweder durch den Bediener geliefert oder berechnet.

17. Steuerungshilfsverfahren nach Anspruch 15, dadurch gekennzeichnet, dass es darin besteht, den Mindestsicherheitsbremsweg des Fahrzeugs (V) auf dem Anweisungsweg (T) und den Wegen (T0, T1) abhängig auch von dem Gefälle und der Schräge der Bahn (P) zu berechnen.

18. Steuerungshilfsverfahren nach irgendeinem der vorgenannten Ansprüche, dadurch gekennzeichnet, dass es darin besteht, die Bilder der Bahn (P) und des Anweisungswegs (T) auf den Kontrollmonitor in der Fernsteuerungszentrale, wo sich der Bediener befindet, zu legen, das Bild der Bahn (P) wird z.B. durch eine auf dem Fahrzeug (V) eingelassene Kamera empfangen.

19. Steuerungshilfsverfahren nach irgendeinem der Ansprüche 1 bis 16, dadurch gekennzeichnet, dass es darin besteht, wenn der Bediener oder Pilot sich im Inneren des Fahrzeugs (V) befindet, den Anweisungsweg (T) über das Bild der Bahn (P) zu legen, das mit der reellen Sicht dieser Bahn (P) durch den Fahrer übereinstimmt.

20. Steuerungshilfsverfahren nach Anspruch 18, dadurch gekennzeichnet, dass es darin besteht, dem Bediener die reelle Sicht der Bahn (P) durch ein Episkop zu vermitteln und darüber den Anweisungsweg (T) mittels einer semitransparenten Scheibe zu legen, die sich z.B. auf dem optischen Weg zwischen dem Auge des Bedieners und dem Eingang des Episkops befindet.

## Claims

1. A piloting-assistance process for a mobile vehicle, in particular a motorised vehicle (V) travelling on a track (P) or road, that is able to superimpose a second image onto a first representative image of the track (P) as seen by an operator that is representative of the commanded trajectory (T) the vehicle (V) must follow if it is to reach a future point of passage (PF) on the track (P) selected by the operator, the image of the commanded trajectory (T) being restricted to the minimum safe stopping distance of the vehicle (V) on this trajectory at its actual speed, *characterised in* that it consists in prolonging said commanded trajectory (T) beyond said stopping distance and for the actual vehicle (V) speed by at least a first piece of visual data representative of the maximum turning possibilities allowable for an on-going or up-coming bend, so as to allow the operator to visually judge the correlation between the true curvature of an on-going or up-coming bend and the maximal possibilities allowed to take this bend.

2. A piloting-assistance process according to Claim 1, characterised in that it consists, to represent the maximum turning possibilities allowed for an on-going or up-coming bend at the actual vehicle (V) speed, in prolonging the commanded trajectory (T), beyond the stop point (A) located at the end of said trajectory (T), by a first piece of data representative of a trajectory (T0) having the minimum safe turning radius (R0) at the actual vehicle (V) speed (T0).

3. A piloting-assistance process according to Claim 2, characterised in that it consists in restricting the image of said trajectory (T0) from the minimum safe turning radius (R0) to the stopping distance of the vehicle (V) on this trajectory (T0) starting from the stop point (A) and computed at the actual vehicle (V) speed.

4. A piloting-assistance process according to Claim 2 or 3, characterised in that it consists, when the image of the track (P) shows an up-coming bend whereas the vehicle (V) is still at a distance from said bend that is at least equal to the minimum safe stopping distance, in allowing the operator to anticipate taking this bend by visual comparison of the perception he has of the turning radius with the minimum safe radius (R0) of the trajectory (T0) at the actual vehicle (V) speed, so as to brake, if required, to reduce the vehicle (V) speed and make it compatible with the minimum turning radius (R0).

5. A piloting-assistance process according to any one of Claims 1 to 4, characterised in that it consists in prolonging the commanded trajectory (T) beyond the minimum safe stopping distance and for the actual vehicle (V) speed, by a second piece of visual data allowing the operator to judge the difference between the maximum allowable turning possibilities and the turning radius of the bend that must be negotiated.

6. A piloting-assistance process according to Claim 5, characterised in that it consists, to enable the operator to judge the afore-mentioned difference to approach or negotiate a bend, when the radius (R) of the commanded trajectory (T) at the stop point (A) located at the end of the commanded trajectory (T) is comprised between R0 and kR0 (k> 1), in prolonging the commanded trajectory (T) by a second piece of visual data representative of a trajectory (T1) having a turning radius (R1) such that R1 = R²/R0, such that if the trajectories (T0) of minimum safe radius (R0) and (T1) of radius (R1) come closer together, the operator deduces that the vehicle is approaching or negotiating a bend at a speed close to the critical speed corresponding to the minimum safe radius (R0).

7. A piloting-assistance process according to Claim 6, characterised in that it consists in restricting the image of the trajectory (T1) of radius (R1) to the stopping distance of the vehicle on this trajectory starting from the stop point (A) and computed at the actual vehicle (V) speed.

8. A piloting-assistance process according to Claim 5, characterised in that it consists, to allow the operator to judge the afore-mentioned difference to approach or negotiate a bend, when the radius (R) of the commanded trajectory (T) at the stop point (A) located at the end of said trajectory is greater than kR0 (k > 1), in prolonging the commanded trajectory (T) beyond the stop point (A) by a second piece of visual data representative of a trajectory (T1) symmetrical to the trajectory (T0) with minimum radius (R0) with respect to the tangent of the commanded trajectory (T) at the stop point (A), such that if the trajectories (T0, T1) have curvatures of opposing signs, the operator deduces that the vehicle (V) can safely reach the future point of passage (PF) he has selected, whereas if the trajectories (T0, T1) have curvatures of the same sign, the operator deduces that the vehicle is approaching or negotiating a bend at a speed close to the critical speed corresponding to the minimum safe radius (R0).

9. A piloting-assistance process according to Claim 8, characterised in that it consists in restricting the image of the trajectory (T1) to the stopping distance of the vehicle (V) on this trajectory (T1) starting from the stop point (A) and computed at the actual vehicle (V) speed.

10. A piloting-assistance process according to Claim 5, characterised in that it consists, to enable the operator to judge the afore-mentioned difference to approach or negotiate a bend, when the radius (R) of the commanded trajectory (T) at the stop point (A) located at the end of said trajectory (T) is greater than kR0 (k > 1), in prolonging the commanded trajectory (T) beyond the stop point (A) by a second piece of visual data representative of a trajectory (T1) symmetrical to the trajectory (T0) of the minimum safe radius (R0) with respect to the commanded trajectory (T) of radius (R), such that if the trajectories (T0, T1) have curvatures of opposing signs, the operator deduces that the vehicle (V) can safely reach the future point of passage (PF) he has selected, whereas if the trajectories (T0, T1) have curvatures of the same sign, the operator deduces that the vehicle is approaching or negotiating a bend at a speed close to that of the critical speed corresponding to the minimum safe radius (R0).

11. A piloting-assistance process according to Claim 10, characterised in that it consists in restricting the image of the trajectory 5T1) of radius (R1) to the stopping distance of the vehicle 5V) on said trajectory (T1) starting from the stop point (A) and computed at the actual vehicle (V) speed.

12. A piloting-assistance process according to Claim 5, characterised in that it consists, to allow the operator to judge the afore-mentioned difference to anticipate, approach and negotiate a bend, when the radius (R) of the commanded trajectory (T) at the stop point (A) located at the end of said trajectory is greater than kR0 (k > 1), in prolonging the commanded trajectory (T) beyond the stop point (A) by a second piece of visual data representative of a trajectory (T1) symmetrical to the trajectory (T0) of minimum radius (R0) with respect to the tangent of the commanded trajectory (T) at the stop point (A), such that if the trajectories (T0, T1) have curvatures of opposing signs, the operator deduces that the vehicle (V) can safely reach the future point of passage (PF) he has selected, whereas if the trajectories (T0, T1) have curvatures of the same sign, the operator deduces that the vehicle is approaching or negotiating a bend at a speed close to the critical speed corresponding to the minimum safe radius (R0).

13. A piloting-assistance process according to Claim 12, characterised in that it consists, to allow the operator to judge the afore-mentioned difference to approach or negotiate a bend, when the turning radius (R) during the commanded trajectory (T) at the stop point (A) located at the end of said trajectory (T) is between R0 and kR0 (k> 1), in prolonging the commanded trajectory (T) by a second piece of visual data representative of a trajectory (T1) having a turning radius of kR0, such that the representation of the trajectories (T0) of radius (R0) and (T1) of radius kR0 shows the operator that the vehicle is approaching or negotiating a bend at a speed close to the critical speed corresponding to the minimum safe radius (R0).

14. A piloting-assistance process according to Claim 12, characterised in that it consists in restricting the image of the trajectory (T1) of radius (kR0) to the stopping distance on said trajectory starting from the stop point (A) and computed at the actual vehicle (V) speed.

15. A piloting-assistance process according to any one of the above Claims, characterised in that it consists in computing the afore-mentioned trajectories (T, T0, T1) by taking into account, in addition to the actual vehicle (V) speed, the geometrical layout of the terrain, in particular in the zone surrounding the stop point (A) located at the end of the commanded trajectory (T).

16. A piloting-assistance process according to any one of the above Claims, characterised in that it consists in computing the minimum safe radius (R0) and the minimum safe stopping distance for the vehicle (V) on the commanded trajectory (T) and the trajectories (T0, T1) as a function of how the vehicle (V) holds the road (P), this value being either provided by the operator or computed.

17. A piloting-assistance process according to Claim 15, characterised in that it consists in computing the minimum safe stopping distance for the vehicle (V) on the commanded trajectory (T) and the trajectories (T0, T1) as a function also of the slope and cant of the track (P).

18. A piloting-assistance process according to any one of the above Claims, characterised in that it consists in superimposing the images of the track (P) and the commanded trajectory (T) on a monitor located in a telepiloting station accommodating the operator, the image of the track (P) being captured by a camera on-board the vehicle (V), for example.

19. A piloting-assistance process according to any one of Claims 1 to 16, characterised in that, in the event of the operator or pilot being inside the vehicle (V), it consists in superimposing the commanded trajectory (T) on the image of the track (P) corresponding to the actual view of said track (P) observed by the pilot.

20. A piloting-assistance process according to Claim 18, characterised in that it consists in giving the operator the actual view of the track (P) through a episcope and in superimposing the commanded trajectory (T) onto it by using a semi-transparent plate placed in the optical path between the operator's eyes and the episcope input, for example.
